# EUROPÄISCHE PATENTANMELDUNG

(11) **EP 4 360 462 A1**
(43) Veröffentlichungstag der Anmeldung: **01.05.2024**
(21) Anmeldenummer: 22204797.9
(22) Anmeldetag: 31.10.2022
(51) Int. Cl.: A23F 5/40, A23L 2/395

(54) **KOMPOSTIERBARE KAPSEL UND HERSTELLUNG DAVON**

(71) Anmelder: Delica AG, 5033 Buchs AG (CH)
(72) Erfinder: FLEISCHLI, Franziska Dora, CH-6005 Luzern (CH); CÁZARES GODOY, Ana Cristina, CH-4600 Olten (CH); SIEFARTH, Caroline, CH-4102 Binningen (CH)
(74) Vertreter: Hepp Wenger Ryffel AG

(57) **Zusammenfassung**

Die Erfindung betrifft eine Kapsel, insbesondere zur Zubereitung eines Getränkes durch Einbringen von Wasser in die Kapsel. Die Kapsel umfasst einen Pressling aus einem Pulver oder einer Pulvermischung. Der Pressling ist mit wenigstens einer Schicht aufweisend mindestens eine Stärke und mindestens eine Fettsäure ummantelt. Die mindestens eine Stärke ist eine Amylose-haltige Stärke, vorzugswiese mit einem Amylose-Gehalt (w/w) zwischen 10 % und 40 %, bevorzugt zwischen 14% und 40 % und ganz besonders bevorzugt zwischen 14% und 25 %. Die Erfindung betrifft auch ein Verfahren zur Herstellung einer solchen Kapsel sowie die Verwendung einer solchen Kapsel.

## Beschreibung

Die vorliegende Erfindung betrifft eine kompostierbare Kapsel sowie ein Verfahren zur Herstellung einer solchen Kapsel und die Verwendung einer solchen Kapsel gemäss den Merkmalen der Oberbegriffe der unabhängigen Ansprüche.

Die Bereitstellung eines Genussmittels wie beispielsweise Kaffee in Kapselform ist hinlänglich bekannt. Die üblicherweise als Hüllmaterialien eingesetzten Werkstoffe, wie Kunststoffe oder Aluminium (z.B. EP 0 468 079 A1), weisen aber den Nachteil auf, dass sie nur mit grossem Aufwand rezyklierbar und meist nicht kompostierbar sind.

Biologisch abbaubare Kaffeekapseln sind bekannt. DE 10 2018 201 187 B3 beschreibt eine Kapsel aus einem mit Biokunststoff compoundierten Holzmaterial. Die Problematik solcher Kapseln aus kompostierbaren Materialien liegt jedoch in deren Verarbeitung. Zwar können diese Kapseln je nach verwendetem Material in Spritzgusstechnik hergestellt werden, die Masshaltigkeit ist jedoch aufgrund des hohen Faseranteils schwierig zu gewährleisten. Insbesondere Dichtkonturen, welche die Zubereitung eines Getränkes unter hohem Druck ermöglichen, sind nur schwer mit geringen Toleranzen auszubilden.

DE 10 2014 000 187 B4 beschreibt eine weitere biologisch abbaubare Kapsel aus einem Pressling aus Kaffeepulver, der mit einer biologisch abbaubaren Schicht ummantelt ist. Dazu wird der Kaffeepressling vorzugsweise mit Flüssigzellulose aus Polysacchariden, einem polyolem Spacer und einem Vernetzer ummantelt. DE 10 2014 000 187 B4 erwähnt auch eine ummantelnde Schicht aus pflanzlicher Stärke und Fettsäure, gibt aber keine Angaben über die Art der Stärke, der Fettsäure oder Angaben zu Mischungsverhältnissen.

Es ist daher Aufgabe der Erfindung, die Nachteile des Standes der Technik zu überwinden. Insbesondere soll eine Kapsel zur Zubereitung eines Getränks zur Verfügung gestellt werden, die kompostierbar ist. Es ist auch eine Aufgabe der Erfindung, ein Verfahren für eine solche Kapsel als auch eine Verwendung bereitzustellen.

Diese Aufgabe wird durch die in den unabhängigen Patentansprüchen definierten Vorrichtungen und Verfahren gelöst. Weitere Ausführungsformen ergeben sich aus den abhängigen Ansprüchen.

Ein erster Aspekt der Erfindung betrifft eine Kapsel, insbesondere zur Zubereitung eines Getränkes durch Einbringen von Wasser in die Kapsel. Die Kapsel umfasst einen Pressling aus einem Pulver oder einer Pulvermischung und der Pressling ist mit wenigstens einer Schicht aufweisend mindestens eine Stärke und mindestens eine Fettsäure ummantelt. Die mindestens eine Stärke der ummantelnden Schicht ist eine Amylose-haltige Stärke, vorzugsweise mit einem Amylose-Gehalt (w/w) zwischen 10 % und 40 %, bevorzugt zwischen 14% und 40 % und ganz besonders bevorzugt zwischen 14% und 25 %.

Es hat sich überraschend gezeigt, dass nicht alle Stärken für die Herstellung einer ummantelnden Schicht einer Kapsel geeignet sind. Vielmehr wurde gefunden, dass die Stärke einen bestimmten Amylosegehalt aufweisen muss. So zeigten Stärken ohne Amylose, beispielsweise Wachsmaisstärke oder Wachsreisstärke, keine homogenen Filme zum Auftragen der Schicht auf den Pressling.

Der Pressling ist zumindest teilweise, vorzugsweise vollflächig, mit der wenigstens einen Schicht ummantelt. Dadurch wird der Pressling weitestgehend vor Feuchtigkeit geschützt.

Die mindestens eine Schicht kann mindestens ein Polyol umfassen, vorzugsweise ausgewählt aus der Gruppe bestehend aus: aliphatischen Polyolen, bevorzugt Ethylenglykol, Propandiol, Butylenglykol, Triethylenglykol, Polyethylenglykol, Polypropylenglykol, Erythrit, Xylit und ganz besonders bevorzugt Sorbitol und Glycerol; cyclische Polyole, bevorzugt Glukose, Fruktose, Mannose, Galaktose, Oligofruktose, Inulin, Isomaltulose, Trehalose; Zuckeraustauschstoffe, bevorzugt Mannit, Isomalt, Maltit, Lactit; und aromatische Polyole, bevorzugt Cyanidin, Corilagin, Digallinsäure, Tanninsäure und Gallussäure; und Kombinationen davon.

Polyol erleichtert das Auftragen des Films, der die Schicht bildet. Der Film ist weniger spröde und damit nach einer Trocknung weniger anfällig für Rissbildung. Zusätzlich verhindert Polyol die Bildung von Fettrückständen auf dem Getränk nach der Getränkezubereitung.

Es wurde überraschend gefunden, dass die Fettsäure und das Polyol miteinander zumindest anteilig zu einem Monofettsäureester reagieren. Monofettsäureester sind wasserunlöslich und bilden wachsartige Massen. Dadurch wird die Feuchtigkeitsbarriere der Beschichtung zusätzlich verbessert.

Vorzugsweise ist die mindestens eine Fettsäure ausgewählt aus der Gruppe bestehend aus: Palmitinsäure, Stearinsäure, Ölsäure, Linolsäure, γ-Linolsäure, Eicosapentaensäure (EPA), Docosahexaensäure (DHA)und Kombinationen davon. EPA und DHA sind besonders bevorzugt bei einem Pressling aus einer Pulvermischung, die Milchpulver enthält.

Die mindestens eine Fettsäure ermöglicht das Auftragen des Films zur Bildung der Schicht. Fettsäuren verhindern ein Einsickern des flüssigen Beschichtungsmediums in den Pressling.

Vorteilhafterweise ist die mindestens eine Stärke ausgewählt aus der Gruppe bestehend aus: Getreidestärken, vorzugsweise Maisstärke, Weizenstärke, Roggenstärke, Gerstenstärke, Hirsestäke, Haferstärke; Kartoffelstärke, Tapiokastärke, Erbsenstärke; und Kombinationen davon. Diese Stärken zeigen einen idealen Amylosegehalt. Versuche mit Wachsmaisstäke oder Wachsreisstärke, die keinen oder nur einen sehr geringen Amylosegehalt aufweisen, liessen sich schlecht handhaben.

Kapsel nach einem der vorherigen Ansprüche, wobei ein Verhältnis (w/w) von Stärke zu Fettsäure in der Schicht zwischen 15:1 und 2:1, vorzugswiese zwischen 10:1 und 4:1, und besonders bevorzugt zwischen 7:1 und 5:1 liegt. Bei einem Verhältnis von 15:1 ist die entsprechend aufzutragende Lösung zwar sehr viskos, aber gerade noch auftragbar. Bei einem Verhältnis von 2:1 bis 4:1 sind die Lösungen je nach verwendeter Stärke sehr flüssig, so dass diese gerade noch auftragbar sind. Optimal ist ein Verhältnis zwischen 10:1 und 4:1, da sich die entsprechenden Lösungen leicht auftragen lassen und eine homogene Optik ergeben.

Ein Verhältnis von 6.6:1 oder 5:1 von Stärke zu Fettsäure ist ganz besonders bevorzugt und ergab die besten Resultate hinsichtlich Qualität der Beschichtung und Auftragbarkeit der Schicht.

Ein Verhältnis (w/w) von Stärke zu Fettsäure zu Polyol in der Schicht kann zwischen 15:1:15 und 2:1:0.1, bevorzugt zwischen 10:1:10 und 4:1:0.5, und besonders bevorzugt zwischen 7:1:7 und 5:1:1 liegen. Das Verhältnis ist derart gewählt, dass sich die entsprechenden Lösungen optimal auftragen lassen und weder zu flüssig, noch zu viskos sind.

Ein Verhältnis von 6.6:1:1.6 von Stärke:Fettsäure:Polyol ist ganz besonders bevorzugt und gab für Mischungen mit Polyol die besten Resultate hinsichtlich Qualität der Beschichtung und Auftragbarkeit der Schicht.

Vorzugsweise weist die Kapsel zwischen 1 und 100 Schichten, bevorzugt 2 und 50 Schichten und ganz besonders bevorzugt 2 und 10 Schichten auf.

Weiter bevorzugt ist eine Kapsel mit mindesten einer Schicht aus Maisstärke, Stearinsäure und wahlweise Glycerol oder Sorbitol.

Weiter bevorzugt ist eine Kapsel aus mindestens einer Schicht aus Maisstärke, Palmitinsäure und Glycerol.

Weiter bevorzugt ist eine Kapsel aus mindestens einer Schicht aus Erbsenstärke, Stearinsäure und Glycerol.

Weiter bevorzugt ist eine Kapsel aus mindestens einer Schicht aus Reisstärke, Stearinsäure und Glycerol.

Es ist auch möglich, dass die Kapsel eine Beschichtung aus mehreren Schichten und aus einer Mischung der vorhergenannten Schichten umfasst.

Vorteilhafterweise ist das Pulver oder die Pulvermischung ausgewählt aus der Gruppe bestehend aus: Kaffee, Kaffeemischungen, Kaffeeersatzmischungen, Tee, Teemischungen, Kakao, Kakaomischungen, Trinkschokolade, Milchpulver, Milchkaffeemischungen, Fruchtmilch, veganer Milchersatz, Instantkaffee, Kaffee-Ersatz-Produke und Trockensuppe, und Kombinationen davon.

Bevorzugt weist die Kapsel eine runde, insbesondere kugelrunde, Form auf. Ebenso ist aber auch denkbar, dass die Form der Kapsel anderen geometrischen Körpern im Wesentlichen entspricht, wie beispielsweise einem Würfel, Quader, Prisma, Pyramide, Zylinder, Kegelstumpf, Kegel, Torus, Ellipsoid, usw. Dabei ist zu beachten, dass allfällige Ecken und Kanten vorzugsweise nicht scharf ausgebildet, sondern abgerundet sind.

Ein weiterer Aspekt der Erfindung betrifft ein Verfahren zur Herstellung einer Kapsel, insbesondere zur Zubereitung eines Getränkes, durch Einbringen von Wasser in die Kapsel, insbesondere eine Kapsel wie vorhergehend beschrieben. Das Verfahren umfasst die Schritte:
a) Bereitstellen eines Presslings aus einem Pulver oder einer Pulvermischung,
b) Auftragen einer Zubereitung aufweisend mindestens eine Stärke und mindestens eine Fettsäure auf den Pressling, wobei die mindestens eine Stärke eine Amylose-haltige Stärke ist,
c) Trocknen der Zubereitung zur Herstellung einer Beschichtung.

Die Zubereitung liegt vorzugsweise als Lösung vor. Die Stärke und die Fettsäuren können gewählt sein aus den Gruppen wie vorhergehend in Bezug auf die Kapsel beschrieben.

Die Zubereitung kann zusätzlich ein Polyol aufweisen, vorzugsweise ausgewählt aus der Gruppe bestehend aus: aliphatischen Polyolen, bevorzugt Ethylenglykol, Propandiol, Butylenglykol, Triethylenglykol, Polyethylenglykol, Polypropylenglykol, Erythrit, Xylit und ganz besonders bevorzugt Sorbitol und Glycerol; cyclische Polyole, bevorzugt Glukose, Fruktose, Mannose, Galaktose, Oligofruktose, Inulin, Isomaltulose, Trehalose; Zuckeraustauschstoffe, bevorzugt Mannit, Isomalt, Maltit, Lactit; und aromatische Polyole, bevorzugt Cyanidin, Corilagin, Digallinsäure, Tanninsäure und Gallussäure; und Kombinationen davon.

Die Zubereitung kann die mindestens eine Stärke in einer Konzentration zwischen 0.5 % bis 25.0 %, bevorzugt zwischen 1.0 % bis 10.0 %, und besonders bevorzugt zwischen 2.0 % bis 8.0 %, enthält.

Die Konzentration ermöglicht die Verkleisterung der Stärke zu Filmen, so dass eine Schicht entstehen kann.

Die Zubereitung kann die mindestens eine Fettsäure in einer Konzentration zwischen 0.1 % bis 3.0 %, bevorzugt zwischen 0.2 % bis 2.0 %, und besonders bevorzugt zwischen 0.3 und 1.0 %, enthält.

Es wurde überraschend gefunden, dass bei Stehenlassen der Zubereitung mit Fettsäure, diese nachdickt. Mit den angegebenen Konzentrationen wird eine optimale Viskosität der Lösung zum Auftragen erreicht. Eine übermässige Trübung der Fettsäurelösung wird verhindert. Die Lösung sollte jedoch nach maximal 24 Stunden nach Zubereitung auf den Pressling aufgebracht werden.

Verfahren nach einem der Ansprüche 10 bis 12, wobei die Zubereitung das mindestens eine Polyol in einer Konzentration zwischen 0.1 bis 4.0 %, bevorzugt zwischen 0.5 bis 3.0 %, und besonders bevorzugt zwischen 1.0 bis 2.0 % enthält.

Bei Zugabe eines Polyols wird die Mischung aus Stärkelösung und Fettsäure zusätzlich stabilisiert, so dass das Polyol die Funktion eines Vermittlers übernimmt.

Die Zubereitung wird vorzugsweise durch gleichzeitiges Mischen der mindestens einen Fettsäure und der mindestens einen Stärke, vorzugsweise mit mindestens einem Polyol, in Wasser und anschliessendes Erwärmen erzeugt.

Dabei bedeutet gleichzeitiges Mischen, dass die Verkleisterung der Stärke erst nach Zugabe aller Stoffe erfolgt. Beispielsweise kann die Stärke zunächst mit oder ohne Polyol mit Wasser gemischt und erwärmt werden. Anschliessend erfolgt die Zugabe der Fettsäure und danach die Verkleisterung.

Alternativ kann die Zubereitung durch schrittweises Mischen der mindestens einen Stärke in Wasser mit anschliessendem Erwärmen, gefolgt von Zugabe der mindestens einen Fettsäure, und vorzugsweise mindestens einem Polyol, erzeugt werden.

Bei diesem Verfahren wird die Verkleisterung der Stärke vor der Zugabe weitere Bestandteile erreicht. Beispielsweise kann zunächst die Stärke mit Wasser gemischt werden und bei erhöhter Temperatur verkleistert werden. Die Stärkeverkleisterung erfolgt üblicherweise bei Temperaturen zwischen 50 und 90 °C. Grundsätzlich hängt die Verkleisterungstemperatur aber von der gewählten Stärke ab und sollte über der Verkleisterungstemperatur der gewählten Stärke liegen.

Idealerweise liegt die Temperatur der Mischung bei Zugabe der Fettsäure oberhalb der Schmelztemperatur der entsprechenden Fettsäure, unabhängig davon on ein gleichzeitiges Mischen oder schrittweises Mischen gewählt wird.

Die Schritte b) und c) können wiederholt werden, um mehrere Schichten aufzutragen. Bevorzugt werden die Schritte b) und c) 1 bis 100 mal durchgeführt, weiter bevorzugt 2 bis 50 mal und ganz besonders bevorzugt 2 bis 10 mal.

Ein Aspekt der Erfindung betrifft auch eine Kapsel hergestellt durch ein Verfahren wie vorhergehend beschrieben.

Ein weiterer Aspekt der Erfindung betrifft die Verwendung einer Kapsel wie vorhergehend beschrieben, vorzugsweise hergestellt nach einem Verfahren wie vorhergehend beschrieben, zur Zubereitung eines Getränkes.

Die Erfindung wird nachfolgend anhand von Beispielen und Figuren näher erläutert. Die Beispiele und Figuren dienen der Veranschaulichung und sind nicht limitierend zu verstehen. Es zeigt:
- Figur 1:: Die resultierenden Presslinge, hergestellt gemäss den erfindungsgemässen Beispielen 1 bis 8.
- Figur 2:: die resultierenden Presslinge, hergestellt nach den nicht erfindungsgemässen Beispielen 9 bis 12.

### BEISPIELE

### Herstellung des Presslings

Für die nachfolgend aufgeführten Beispiele wurde jeweils ein kugelförmiger Pressling für die Kaffeezubereitung durch Verdichten von 5.7 g geröstetem gemahlenen Kaffeepulver, bei 30 MPa in einer Presse hergestellt. Das Kaffeepulver wies einen Feuchtigkeitsgrad von 3.5 % auf. Die mittlere Korngrösse des Kaffeepulvers betrug 400 µm ± 100 µm.

### Beispiel 1

Thingum 100 (Maisstärke, 25 % Amylose) und Glycerol werden in deionisiertem Wasser gelöst, so dass sich eine Konzentration (w/w) von 4 % Stärke und 1 % Glycerol ergibt. Anschliessend wird die Mischung 5 min bei 70 °C erwärmt. Anschliessend erfolgt die Zugabe von Stearinsäure, so dass sich eine 0.6 %-Lösung ergibt. Danach wird die Mischung bei erhöhter Temperatur bei 90°C für 30 min verkleistert und auf Raumtemperatur abgekühlt.

Der Pressling wurde 6 s in die wässrige Lösung eingetaucht und ca. 6 min bei 25 °C im Luftstrom getrocknet. Anschliessend wurde der Pressling ein zweites Mal für 6 s in die Lösung eingetaucht und danach für 15 min bei 25 °C getrocknet.

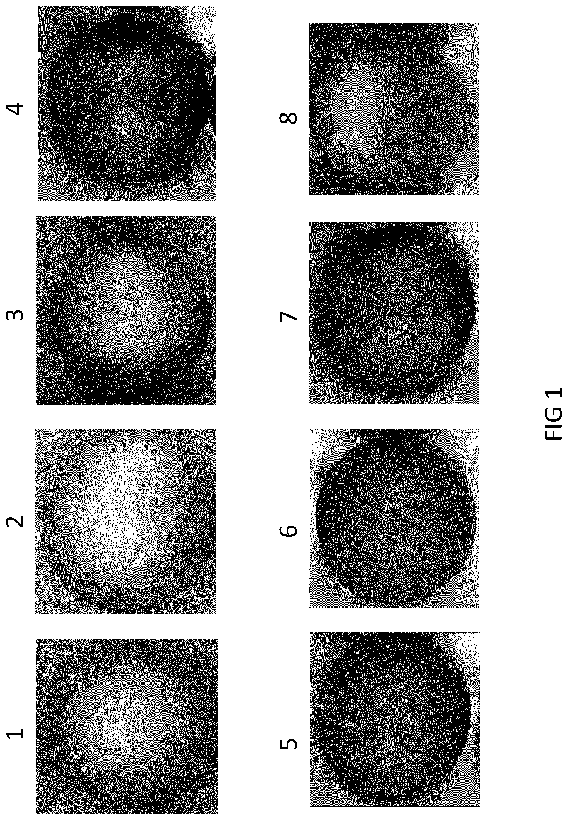

Der resultierende beschichtete Pressling 1 ist in Figur 1 ersichtlich.

### Beispiel 2

Thingum 100 wird mit deionisiertem Wasser gemischt, so dass sich eine 4 %ige Stärkelösung ergibt. Anschliessend wird die Stärkelösung bei erhöhter Temperatur von 90 °C für 20 min verkleistert. Im Anschluss werden Glyerol und Stearinsäure dazugegeben, so dass Glycerol als 1 %ige Lösung vorliegt und Stearinsäure als 0.6 %ige Lösung. Diese werden bei erhöhter Temperatur, d.h. 90 °C für weitere 20 min, eingearbeitet. Danach wird die Lösung auf Raumtemperatur abgekühlt.

Die Beschichtung des Presslings erfolgt gemäss Beispiel 1. Der resultierende beschichtete Pressling 2 ist in Figur 1 ersichtlich.

### Beispiel 3

Beispiel 3 entspricht Beispiel 1 mit dem Unterschied, dass der Gylcerolgehalt 2 % beträgt.

Der resultierende beschichtete Pressling 3 ist in Figur 1 ersichtlich.

### Beispiel 4

Reisstärke wird in deionisiertem Wasser gelöst, so dass sich eine Konzentration (w/w) von 4 % Stärke. Anschliessend wird die Stärkelösung bei erhöhter Temperatur von 90 °C für 20 min verkleistert. Im Anschluss werden Glyerol und Stearinsäure dazugegeben, so dass Glycerol als 1 %ige Lösung vorliegt und Stearinsäure als 0.6 %ige Lösung. Diese werden bei erhöhter Temperatur, d.h. 90 °C für weitere 20 min, eingearbeitet. Danach wird die Lösung auf Raumtemperatur abgekühlt.

Der Pressling wurde 6 s in die wässrige Lösung eingetaucht und ca. 6 min bei 25 °C im Luftstrom getrocknet. Anschliessend wurde der Pressling ein zweites Mal für 6 s in die Lösung eingetaucht und danach für 15 min bei 25 °C getrocknet.

Der resultierende beschichtete Pressling 4 ist in Figur 1 ersichtlich.

### Beispiel 5

Erbsenstärke (20-22 % Amylose) wird in deionisiertem Wasser gelöst, so dass sich eine Konzentration (w/w) von 4 % Stärke ergibt. Anschliessend wird die Stärkelösung bei erhöhter Temperatur von 90 °C für 20 min verkleistert. Im Anschluss werden Glyerol und Stearinsäure dazugegeben, so dass Glycerol als 1 %i-ge Lösung vorliegt und Stearinsäure als 0.6 %ige Lösung. Diese werden bei erhöhter Temperatur, d.h. 90 °C für weiter 20 min, eingearbeitet. Danach wird die Lösung auf Raumtemperatur abgekühlt.

Der Pressling wurde 6 s in die wässrige Lösung eingetaucht und ca. 6 min bei 25 °C im Luftstrom getrocknet. Anschliessend wurde der Pressling ein zweites Mal für 6 s in die Lösung eingetaucht und danach für 15 min bei 25 °C getrocknet.

Der resultierende beschichtete Pressling 5 ist in Figur 1 ersichtlich.

### Beispiel 6

Beispiel 6 entspricht Beispiel 5, wobei die Konzentrationen (w/w) von Stärke 2 % und von Stearinsäure 0.6 % betragen.

Der resultierende beschichtete Pressling 6 ist in Figur 1 ersichtlich.

### Beispiel 7

Beispiel 7 entspricht Beispiel 2, mit dem Unterschied, dass statt Stearinsäure Palmitinsäure verwendet wird.

Der resultierende beschichtete Pressling 7 ist in Figur 1 ersichtlich.

### Beispiel 8

Thingum 100 (Maisstärke, 25 % Amylose) wurde in deionisiertem Wasser gelöst, so dass sich eine Konzentration (w/w) von 4 % Stärke ergibt. Anschliessend wird die Stärkelösung bei erhöhter Temperatur von 90 °C für 20 min verkleistert. Im Anschluss werden Sorbitol und Stearinsäure dazugegeben, so dass Sorbitol als 2 %ige Lösung vorliegt und Stearinsäure als 0.6 %ige Lösung. Diese werden bei erhöhter Temperatur, d.h. 90 °C für weitere 20 min, eingearbeitet. Danach wird die Lösung auf Raumtemperatur abgekühlt.

Der Pressling wurde 6 s in die wässrige Lösung eingetaucht und ca. 6 min bei 25 °C im Luftstrom getrocknet. Anschliessend wurde der Pressling ein zweites Mal für 6 s in die Lösung eingetaucht und danach für 15 min bei 25 °C getrocknet.

Der resultierende beschichtete Pressling 8 ist in Figur 1 ersichtlich.

### VERGLEICHSBEISPIELE

### Beispiel 9

Beispiel 9 entspricht Beispiel 1, mit der Ausnahme, dass die Lösung ohne Stearinsäure hergestellt wurde.

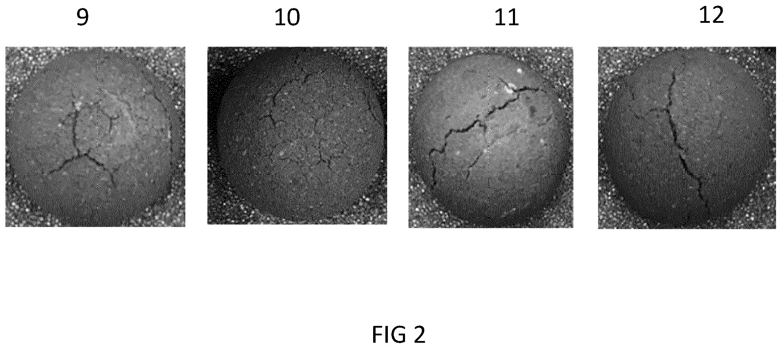

Der resultierende Pressling 9 ist in Figur 2 ersichtlich.

### Beispiel 10

Beispiel 10 entspricht Beispiel 3 ohne Stearinsäure.

Der resultierende Pressling 10 ist in Figur 2 ersichtlich.

### Beispiel 11

Thingum 300 (Wachsmaisstärke, 0 % Amylose) und Glycerol werden in deionisiertem Wasser gelöst, so dass sich eine Konzentration (w/w) von 4 % Stärke und 1 % Glycerol ergibt. Anschliessend wird die Mischung 5 min auf 70°C erwärmt. Anschliessend erfolgt die Zugabe von Stearinsäure, so dass sich eine 0.6 %-Lösung ergibt. Danach wird die Mischung bei erhöhter Temperatur bei 90°C für 30min verkleistert und auf Raumtemperatur abgekühlt.

Der Pressling wurde 6 s in die wässrige Lösung eingetaucht und ca. 6 min bei 25 °C im Luftstrom getrocknet. Anschliessend wurde der Pressling ein zweites Mal für 6 s in die Lösung eingetaucht und danach für 15 min bei 25 °C getrocknet.

Der resultierende Pressling 11 ist in Figur 2 ersichtlich.

### Beispiel 12

Beispiel 12 entspricht Beispiel 11 ohne Stearinsäure.

Der resultierende Pressling 12 ist in Figur 2 ersichtlich.

Figur 1 zeigt beschichtete Presslinge gemäss den erfindungsgemässen Beispielen 1 bis 8. Alle Kapseln zeigen eine Ballform, die Beschichtung ist glatt, meist glänzend und durchsichtig.

Die Art der Herstellung der Lösung (also Vermischen gemäss z.B. Beispiel 1 oder Beispiel 2 spielte für das Resultat der Beschichtung keine wesentliche Rolle.

Figur 2 zeigt die erhaltenen Presslinge gemäss der nicht erfindungsgemässen Vergleichsbeispiele 9 bis 12. Die Bälle zeigen Risse und keine glatte und glänzende Beschichtung. Bälle, die mit Thingum 300-Lösungen beschichtet wurden (Beispiele 11 und 12) zeigten zwar nach dem Auftragen ein weniger klebriges Verhalten, dafür aber ebenfalls Risse im Ball nach der Trocknung.

## Patentansprüche

1. Kapsel, insbesondere zur Zubereitung eines Getränkes durch Einbringen von Wasser in die Kapsel, wobei die Kapsel einen Pressling aus einem Pulver oder einer Pulvermischung umfasst und der Pressling mit wenigstens einer Schicht aufweisend mindestens eine Stärke und mindestens eine Fettsäure ummantelt ist, **dadurch gekennzeichnet, dass** die mindestens eine Stärke eine Amylose-haltige Stärke ist, vorzugswiese mit einem Amylose-Gehalt (w/w) zwischen 10 % und 40 %, bevorzugt zwischen 14% und 40 % und ganz besonders bevorzugt zwischen 14% und 25 %.

2. Kapsel nach Anspruch 1, wobei die mindestens eine Schicht mindestens ein Polyol umfasst, vorzugsweise ausgewählt aus der Gruppe bestehend aus: aliphatischen Polyolen, bevorzugt Ethylenglykol, Propandiol, Butylenglykol, Triethylenglykol, Polyethylenglykol, Polypropylenglykol, Erythrit, Xylit und ganz besonders bevorzugt Sorbitol und Glycerol; cyclische Polyole, bevorzugt Glukose, Fruktose, Mannose, Galaktose, Oligofruktose, Inulin, Isomaltulose, Trehalose; Zuckeraustauschstoffe, bevorzugt Mannit, Isomalt, Maltit, Lactit; und aromatische Polyole, bevorzugt Cyanidin, Corilagin, Digallinsäure, Tanninsäure und Gallussäure; und Kombinationen davon.

3. Kapsel nach einem der vorherigen Ansprüche, wobei die mindestens eine Fettsäure ausgewählt ist aus der Gruppe bestehend aus: Palmitinsäure, Stearinsäure, Ölsäure, Linolsäure, γ-Linolsäure, Eicosapentaensäure (EPA), Docosahexaensäure (DHA) und Kombinationen davon.

4. Kapsel nach einem der vorherigen Ansprüche, wobei die mindestens eine Stärke ausgewählt ist aus der Gruppe bestehend aus: Getreidestärken, vorzugsweise Maisstärke, Weizenstärke, Roggenstärke, Gerstenstärke, Hirsestäke, Haferstärke, Reisstärke; Kartoffelstärke, Tapiokastärke, Erbsenstärke; und Kombinationen davon.

5. Kapsel nach einem der vorherigen Ansprüche, wobei ein Verhältnis (w/w) von Stärke zu Fettsäure in der Schicht zwischen 15:1 und 2:1, vorzugswiese zwischen 10:1 und 4:1, und besonders bevorzugt zwischen 7:1 und 5:1 liegt.

6. Kapsel nach einem der Ansprüche 2 bis 5 wobei ein Verhältnis (w/w) von Stärke zu Fettsäure zu Polyol in der Schicht zwischen 15:1:15 und 2:1:0.1, bevorzugt zwischen 10:1:10 und 4:1:0.5, und besonders bevorzugt zwischen 7:1:7 und 5:1:1 liegt.

7. Kapsel nach einem der Ansprüche 1 bis 6 wobei das Pulver oder die Pulvermischung ausgewählt ist aus der Gruppe bestehend aus: Kaffee, Kaffeemischungen, Kaffeeersatzmischungen, Tee, Teemischungen, Kakao, Kakaomischungen, Trinkschokolade, Milchpulver, Milchkaffeemischungen, Fruchtmilch, veganer Milchersatz, Instantkaffee, Kaffee-Ersatz-Produke und Trockensuppe, und Kombinationen davon.

8. Verfahren zur Herstellung einer Kapsel, insbesondere zur Zubereitung eines Getränkes, durch Einbringen von Wasser in die Kapsel, insbesondere eine Kapsel nach einem der Ansprüche 1 bis 7, umfassend die Schritte:
- Bereitstellen eines Presslings aus einem Pulver oder einer Pulvermischung,
- Auftragen einer Zubereitung aufweisend mindestens eine Stärke und mindestens eine Fettsäure auf den Pressling, wobei die mindestens eine Stärke eine Amylose-haltige Stärke ist,
- Trocknen der Zubereitung zur Herstellung einer Beschichtung.

9. Verfahren nach Anspruch 8, wobei die Zubereitung die mindestens eine Stärke in einer Konzentration zwischen 0.5 % bis 20.0 %, bevorzugt zwischen 1.0 % bis 10.0 %, und besonders bevorzugt zwischen 2.0 % bis 8.0 %, enthält.

10. Verfahren nach einem der Ansprüche 8 bis 9, wobei die Zubereitung die mindestens eine Fettsäure in einer Konzentration zwischen 0.1 % bis 3.0 %, bevorzugt zwischen 0.2 % bis 2.0 %, und besonders bevorzugt zwischen 0.3 und 1.0 %, enthält.

11. Verfahren nach einem der Ansprüche 8 bis 10, wobei die Zubereitung das mindestens eine Polyol in einer Konzentration zwischen 0.1 bis 4.0 %, bevorzugt zwischen 0.5 bis 3.0 %, und besonders bevorzugt zwischen 1.0 bis 2.0 % enthält.

12. Verfahren nach einem der Ansprüche 8 bis 11, wobei die Zubereitung durch gleichzeitiges Mischen der mindestens einen Fettsäure und der mindestens einen Stärke, vorzugsweise mit mindestens einem Polyol, in Wasser und anschliessendes Erwärmen erzeugt wird.

13. Verfahren nach einem der Ansprüche 8 bis 11, wobei die Zubereitung durch Mischen der mindestens einen Stärke in Wasser mit anschliessendem Erwärmen, gefolgt von Zugabe der mindestens einen Fettsäure, und vorzugsweise mindestens einem Polyol, erzeugt wird.

14. Kapsel hergestellt durch ein Verfahren gemäss einem der Ansprüche 8 bis 13.

15. Verwendung einer Kapsel nach einem der Ansprüche 1 bis 7, vorzugsweise hergestellt nach einem Verfahren gemäss einem der Ansprüche 8 bis 13, zur Zubereitung eines Getränkes.
